# EUROPEAN PATENT APPLICATION

(11) **EP 1 962 534 A1**
(43) Date of publication of application: **27.08.2008**
(21) Application number: 07300816.1
(22) Date of filing: 22.02.2007
(51) Int. Cl.: H04Q 7/32, H04M 1/725, G06F 3/048

(54) **Method and device for message consultation on a terminal system of an end-user**

(71) Applicant: GEMPLUS, 13420 Gémenos (FR)
(72) Inventor: Brule, Gilles, 13012, Marseille (FR)

(57) **Abstract**

The invention relates to a method and device for message consultation on a terminal system of an end-user.
This method is based on a message reception detection step (1) and a signaling step of the reception by displaying (2) on the screen of the mobile terminal, the incoming of the said message, using one part of the screen, the signaling being constituted by at least part of the content of the message, thereby leaving available another part of the screen for displaying other items (5).

## Description

The invention relates to a method and a device for message consultation on a telecommunication mobile terminal system of an end-user. More particularly, the invention relates to a method and a device to ease the consultation of shorts messages, providing a friendlier and easy to use way for signaling shorts messages reception to mobile device end- users.

In such method the end-user is alerted when a new message arrives. Indeed, mobile terminals connected to mobile telecommunication standardised network allow emission and reception of Short Messages Services (SMS) that can carry either text or binary data. Data messages are intended to the Subscriber Identity Module (SIM) applications and stored into the SIM, text messages can be read by the mobile terminal end-user. These messages can be sent by colleagues, friends, by the mobile network operator or by third parties and contain useful information. When a message is received, an envelope is generally displayed by the mobile terminal; sometimes a ring tone is emitted.

Nevertheless, the end-user has to go through the mobile terminal menus to retrieve the content of the message. If the mobile terminal end-user is in a hurry, he will avoid this time consuming effort and therefore will delay or even miss the reading of what can be an important message.

Any people even don't know they have a message(s) box and never access it.

Delaying the message reading can also induce that this one will be obsolete when the mobile terminal end-user will finally read it, if it deals about an urgent date as an example.

Currently, as disclosed on the web site available for example at http://in.mobile.yahoo.com/new/flash/#abtflash, it is possible to send and receive "flash SMS" (short message system). This solution provides a way to send urgent messages making quite sure the end-user will have a look at it as soon as possible. But there is still a need of using dedicated mobile devices and both the sender and the receiver must have the "flash SMS" solution implemented on their mobile devices.

It is thus desirable to provide a portable and user friendly way to allow mobile terminal end-user to have a quick look at received messages. This purpose is achieved by way of the invention as recited in the appended claims.

Other purposes, benefits and aspects of the invention will appear through the following description, which is made in reference to the appended figures, among which:
- figure 1 represents the screens the mobile terminal end-user is seeing when receiving an SMS on his mobile terminal, this terminal being a classical handset without the invention,
- Figure 2 represents the screens the end-user will see using an embodiment of the invention, and
- Figure 3 is a flowchart showing a sequence of steps, according to one method in the system in figure 2 for, when the end-user mobile terminal system detects a reception of a message. Without any action from the mobile terminal end-user, due to one embodiment of the disclosed invention, a part of the message rises suddenly on one part of the screen of the end-user mobile device.

In such method the end-user is alerted every time a new message arrives, without any dedicated end-user action.

The message can be stored locally and resides on the personal token, also referenced as an UICC card, SIM, USIM, ISIM, Mega SIM, any other smart card or an integrated chip, on the mobile device or on a remote server.

The message can be the one standardized in ETSI dedicated standards or another one stored as an example into a mobile terminal.

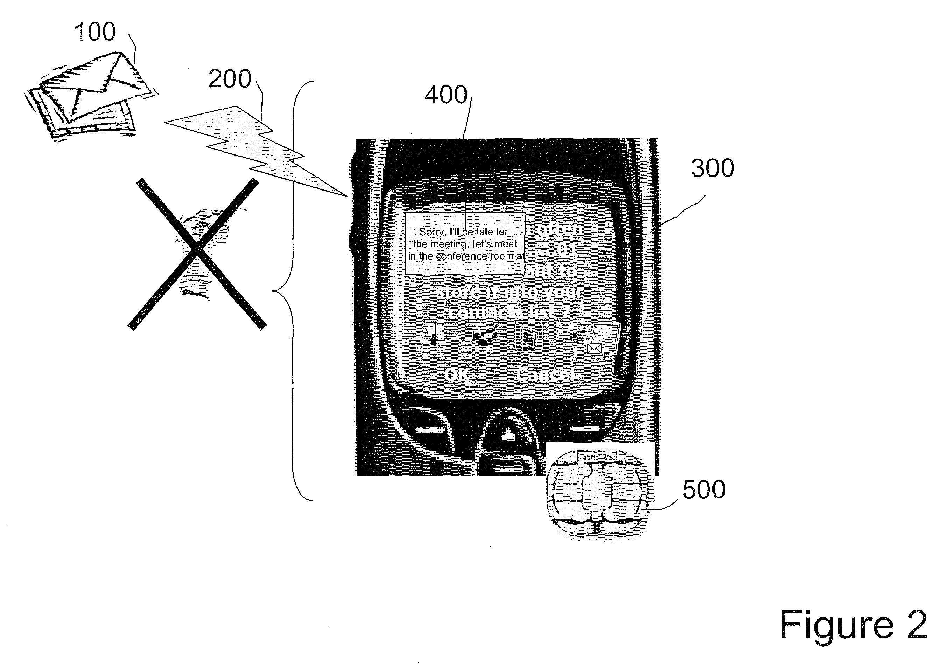

As disclosed into figure 2, the end-user will see on the screen of his mobile device, a pop-up sub-window hiding only one part of the screen, in which a part of the content of the message will be displayed, thereby leaving available another part of the screen for displaying other items.

The invention involves a dedicated application to provide an automatic display of received messages.

According to one aspect of the invention, this application is an applet stored into the personal token.

In a preferred embodiment, this standalone application stored in the personal token will check reception of incoming text messages, being activated on the event dedicated to message reception and ask the mobile device to display the first characters of the message on the screen of the end-user mobile device.

In one embodiment, the name (if it can be retrieved using as an example the phonebook), or the phone number of the sender can be displayed as well in the preview view of received message.

There are several ways by which the said application can provide a previous quick view of received message.

Another step can be added, allowing the mobile terminal end-user to have a look at the full content of the message, pressing a dedicated button or touching a dedicated area of a touch sensitive part of the screen of the mobile device as an example.

These different additional steps include, but are not limited to, usage of usual man to machine interface as used onto mobile terminal screen. They can be as well based on bitmap or icons usage, or even audio messages for blind people as example.

Hereafter, an embodiment of the invention will be described wherein the end-user is receiving a standardized text SMS using a mobile terminal, a handset, associated to a subscriber identity module, connected via a mobile radio communication network such as GSM or 3G telecommunication network.

On the said subscriber identity module, in a dedicated memory such as a flash memory or EEPROM memory, a dedicated application is stored. The application can be installed into the memory of the card during personalization step, before putting it on the market or installed using Over the Air (OTA) infrastructure. This dedicated application can be stored into the mobile terminal memory in another embodiment.

However, those skilled in the art should recognize that the method is applicable to other types of communication sessions between two devices operable either on the same network or different networks.

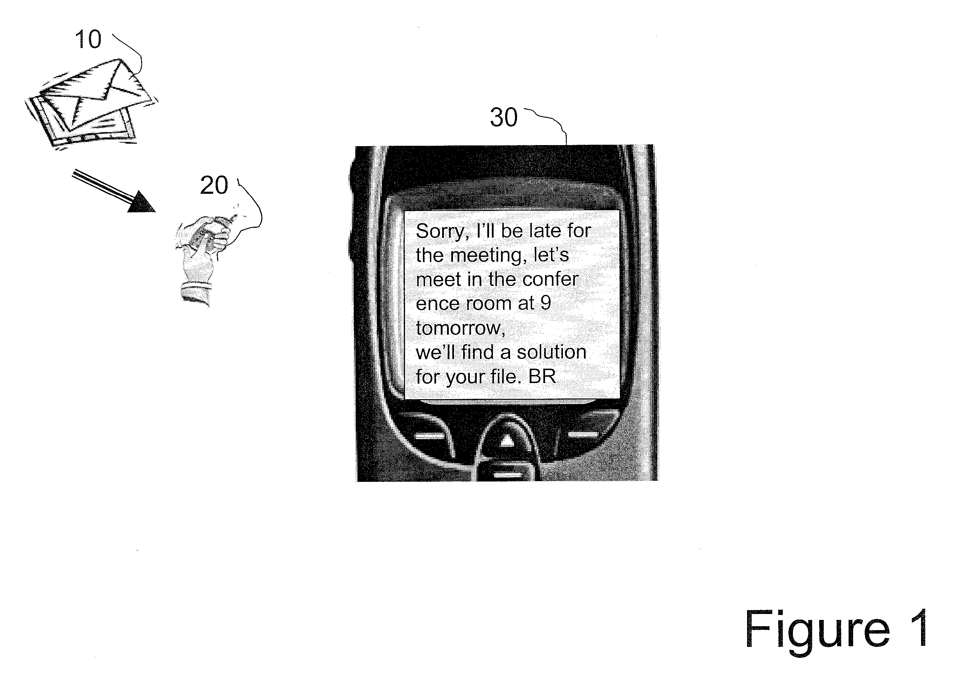

Figure 2 shows the main screens the end-user xxx will see when using such implementation of the disclosed solution whereas figure 1 shows the screens the mobile terminal end-user will see without the invention.

In figure 1, on reception of an SMS detection, the end-user will see on the screen of the mobile terminal screen a small envelop 10, indicating he received at least one SMS. He'll then have to scroll into several menus 20 in order to be able to read the content of this message 30.

As shown on figure 2, with the invention, on reception of an SMS detection 200, a dedicated application (not shown) stored inside the subscriber identity module 500 is activated 200, allowing the automatic showing of the first part of the data of the message 400 on the end-user mobile device screen 300.

Screen can be any visualisation mean such as a tactile screen, a more classical phosphorescent surface on which an image is displayed, as on a television, computer monitor, or mobile handset.

In the above disclosed embodiment, at the update of EF SMS storing the SMS on the SIM card, an applet is triggered. This applet will check the content of standardised EF SMS. Based on sender phone number, the applet will retrieve Sender name in EF ADN (abbreviated dialing numbers). It will then display first characters (30 could be a default value) of last received SMS (Short Message Service) in a temporary manner 400.

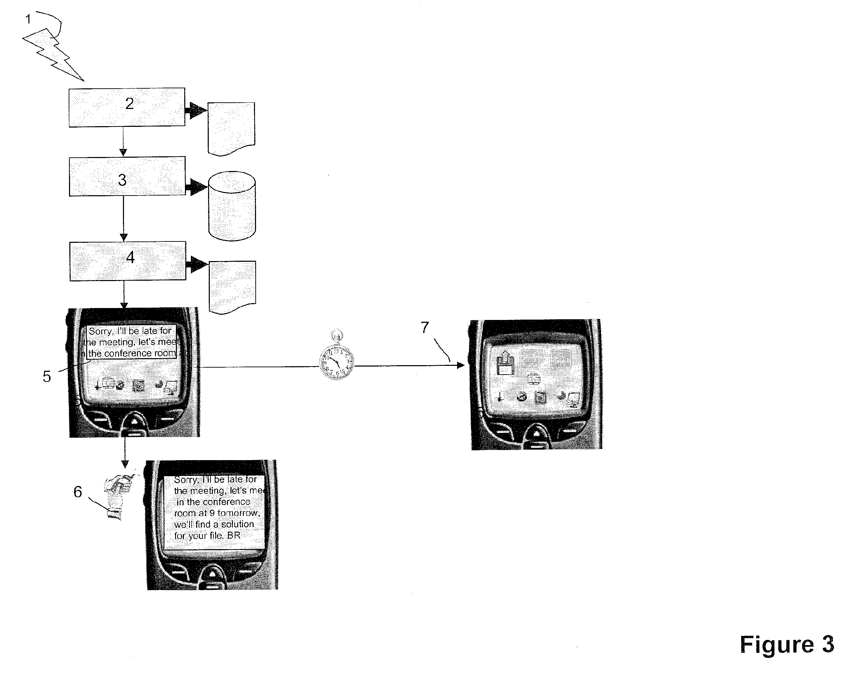

Referring to Figure 3, in order to get more in details, a detailled implementation can be based on the usage of SIM toolkit standardized commands.

On SMS reception from the mobile terminal as shown in step 1, the dedicated application is activated step 2 and it allows a quick preview of part of the received message step 5, as disclosed by the flowchart shown on figure 3 where:
- On reception of message detection, triggering of a standard event appears so that the dedicated application is waked up, step 1.
- The said dedicated application then reads data related to the message in a dedicated file of the personal token, step 2,
- The application prepares the content of the display it'll ask the mobile device to show to the end-user in a dedicated sub-area of the screen, step 3,
- The optional step of checking if the name or other information concerning the sender of the message are available is performed (read in the associated folder of the phonebook as an example, read in dedicated files with corresponding tables as well), step 4,
- Once the content to be displayed is ready, the application asks the mobile device to display it in a dedicated sub-area of the screen, thereby leaving available another part of the screen for displaying other items, step 5,
- The optional functionality of allowing the end-user to ask for a full view of the whole content of the message is made available at that time, step 6,
- After a certain period of time that is a parameter set into the personal token at the present case, here an end-user choice, or even a predefined number of seconds, the dedicated sub-area is withdrawn from the screen of the end-user mobile device, step 7.

Advantageously, the predetermined period is automatically set on a period of time corresponding to the necessary period for an end-user to understand a set of 5 to 6 words (around 30 characters) and then the message disappears. This allows the end-user to take notice of the general purpose of the message without leaving the message available for reading by any surrounding person.

Advantageously, in a preferred embodiment, the implementation of this invention is based on Javacard Event File Update described in ETSI TS102.241 Rel 6.

As represented on figure 3, at the update of EF SMS storing the SMS on the personal token, the dedicated applet implementing the disclosed invention is triggered, step 1. This applet accesses and reads the standardised EF SMS, step 2.

Based on sender phone number, it optionally retrieves the sender name in the personal token phonebook also called EF ADN.

The dedicated applet then displays the first characters (30 could be a default value as an example) of the just received SMS, on a dedicated sub-part of the screen of the mobile device, in a temporary manner, steps 5 and 6.

In one embodiment, upon selection by the end-user of a predefined button (OK Button as an example) the whole content of the received message is displayed, using a Select Item command, to select between display all the content of the message or to erase it, step 6 and then step 7.

According to some embodiments of the method, once displayed, the message can be replied or erased.

The dedicated application (not shown) is preferably stored on the subscriber identity module 500, more specifically in the subscriber identity module memory.

According to one embodiment, the subscriber identity module can also be a piece of software, the dedicated said application being in this case also a piece of software.

According to one other embodiment, a new dedicated SIM toolkit application is stored in the subscriber identity module memory for implementing the method that is above described and the display of content is made using the MMI (Man Machine Interface) of the mobile terminal. Such an application is also known as an applet, or more specifically a cardlet, when implemented on a Java^{™} card type of subscriber identity module. Hereafter, this application will be referred to as an agent application. The subscriber identity module processor executes this agent application.

Although the invention is described with the SMS messages being implemented as described into ETSI standards, it is not to be construed to be limited as such. For example, although not ideal, the message may be sent to the personal token via another channel between the mobile terminal and the subscriber identity module such a BIP (Bearer Independent Protocol).

As another example, although the mobile terminal 400 and the personal token 500 are shown and described to be linked devices, it should not be construed to be limited as such. They can be as example two separate devices communicating using contactless channels such as infrared IrDA or ISO 14443.

Accordingly, the mobile terminal 400 and the personal token 500 operate on networks including a public switched telephone network (PSTN), a mobile communication network, an Internet protocol (IP) network, etc. The communication session may be a voice or a data communication session. Examples of a data communication session include, but are not limited to, audio streaming, video streaming, video conferencing, Voice Over IP (VOIP) etc.

The disclosed invention allows having a first quick look at incoming messages. The mobile terminal end-user will not more waste time scrolling menus, in order to access the whole content of received messages, without knowing if it's a relevant message or not.

In order to check if it's important to consider the incoming message in an urgent manner or not and to see whether it is needed to access the full content, the mobile terminal end-user will use the above disclosed invention. It minimizes indeed the risk to miss an important message for the end-user or to discover it too late. As an example, important changes in a soon coming date, when discovered too late are no more relevant and could have strong consequences.

The present embodiment of the invention can be implemented on all the mobile systems available on the market in the same way, with the same end-user experience. It is indeed portable and can be used on all handsets, whatever its brand and model, du to the fact that the application is implemented inside the personal token associated with any mobile terminal.

The solution catches all messages, no need to characterise them when building them for sending from a sender point of view.

The disclosed invention is basically well adapted to SMS text messages but it can also be applied to other kinds of data such as bitmaps, content of MMS (Multimedia Message Service) messages or any kind of multimedia data such as video.

In these respective cases, only a part of the bitmap, the image part of an MMS (Multimedia Message Service) or a part of the animated screen of a video is displayed on the screen of the mobile terminal so as to let visible other items originally present on the screen.

This invention allows having a first look at incoming messages to check their importance and see whether there is a need for the mobile terminal end-user to access the full content of received message. Thanks to this invention, the risk to miss an important message is minimized. The disclosed invention is a user friendly way to allow mobile terminal end-user to have a quick look at received messages; without having to take care on regular basis of incoming messages and being disturbed by a dedicated action of periodically checking incoming message and then being distracted from their main activities.

## Claims

1. A method for message consultation on a terminal system of an end-user, which terminal system comprises a mobile terminal equipped with a screen and a personal token,
• said method comprising a message reception detection step (step1), and
• a signaling step of the reception of a message (step 2) by displaying on the screen of the mobile terminal, an indicator of the incoming of the said message, using only one part of the screen (step 5), **characterized in that** the indicator of the incoming of the said message is constituted by at least part of the content of the message, thereby leaving available another part of the screen for displaying other items (step 5).

2. The method according to claim 1, **characterized in that** the signaling step by displaying only a part of the content on one part of the screen is automatically erased after a predefined period of time (step 5, step7).

3. The method according to claim 2, **characterized in that** the predefined period of time is limited by a maximum numerical value.

4. The method according to claim 1, 2 or 3, **characterized in that** a man to machine interface entry is used for allowing asking for a full display of the message content (step 6).

5. The method according to one of the claims 1 to 4, where the said displayed at least part of the content of the message is limited to a predefined content volume.

6. The method according to claim 5, **characterized in that** the predefined content volume is an amount of alphanumerical symbols (step 5).

7. The method according to one of the claims 1 to 6, **characterized in that** a man to machine interface entry is used for allowing asking for a full display of message associated data among name of sender, time, size.

8. A terminal system comprising a mobile terminal (300) and a personal token (500), which terminal system stores and runs instructions for inducing the terminal system into easing message consultation, the instructions inducing the terminal system into :
• detecting a message reception step (step 1), and
• signaling the reception step (step 2) by displaying on the screen of the mobile terminal, an indicator of the incoming of the said message using one part of the screen (step 5) **characterized in that** the displayed indicator is constituted by part of the content of the message, thereby leaving available another part of the screen for displaying other items (step 5).

9. The terminal system (300, 500) according to claim 8, **characterized in that** the said displayed indicator is limited to a predefined content volume.

10. The terminal system (300, 500) according to claim 8 or 9, **characterized in that** the signaling step by displaying part of the content on one part of the screen is realized over a predefined period of time (step 5, step7).

11. The terminal system (300, 500) according to claim 8, 9 or 10, **characterized in that** a man to machine interface entry is used for allowing asking for a full display of the message content (step 6).

12. The terminal system (300, 500) according to one of the claims 8 to 11, **characterized in that** a man to machine interface entry is used for allowing asking for a full display of the message associated data among name of sender, time, and size.

13. A personal token (500) for being associated to a terminal (300) inside a communication network, the said personal token being storing and running instructions which induce the personal token into:
• detecting a message reception step (step 1), and
• signaling the reception step (step 2) by displaying an indicator on the screen of the mobile terminal (400, 300), of the incoming of the said message, using only one part of the screen (step 5),
**characterized in that** the displayed indicator is constituted by part of the content of the message, thereby leaving available another part of the screen for displaying other items (step 5).
